# EUROPÄISCHE PATENTANMELDUNG

(11) **EP 3 100 890 A1**
(43) Veröffentlichungstag der Anmeldung: **07.12.2016**
(21) Anmeldenummer: 15170395.6
(22) Anmeldetag: 03.06.2015
(51) Int. Cl.: B60K 6/48, B60K 6/365, B60K 6/547, F16H 3/72, F16H 3/44

(54) **GETRIEBEVORRICHTUNG MIT EINER ELEKTRISCHEN MASCHINE**

(71) Anmelder: ZF Friedrichshafen AG, 88046 Friedrichshafen (DE)
(72) Erfinder: Ziemer, Peter, 88069 Tettnang (DE); Horn, Matthias, 88069 Tettnang (DE); Brehmer, Martin, 88069 Tettnang (DE); Kaltenbach, Johannes, 88048 Friedrichshafen (DE)

(57) **Zusammenfassung**

Es wird eine Getriebevorrichtung (1) mit einer elektrischen Maschine (2) und mit vier Planetenradsätzen (P1 bis P4) mit sechs in Drehzahlordnung als erste, zweite, dritte, vierte, fünfte und sechste Anschlusswelle bezeichnete Anschlusswellen (W1 bis W6) beschrieben. Schaltelemente (A bis E, R) sind dazu eingerichtet, eine Auswahl der Anschlusswellen (W1, W3 bis W6) mit der Getriebeeingangswelle zu verbinden und/oder drehfest festzusetzen. Eine Getriebeausgangswelle (4) ist mit der in Drehzahlordnung zweiten Anschlusswelle (W2) verbunden. Die als Stege ausgebildeten Planetenradsatzwellen (ST1 bis ST4) der vier Planetenradsätze (P1 bis P4) sind durch die in Drehzahlordnung dritte Anschlusswelle (W3) miteinander verbunden. Ein Rotor (11) der elektrischen Maschine (2) ist an der in Drehzahlordnung sechsten Anschlusswelle (W6) angebunden. Zusätzlich steht die sechste Anschlusswelle (W6) mit Stufenplanetenrädern (6) wenigstens eines der Planetenradsätze (P1, P2) in Wirkverbindung.

## Beschreibung

Die Erfindung betrifft eine Getriebevorrichtung mit einer elektrischen Maschine gemäß der im Oberbegriff des Patentanspruches 1 näher definierten Art.

Aus der nicht veröffentlichten DE 10 2013 225 205 der Anmelderin ist eine als Vier-Gang-Getriebe für Hybridanwendungen ausgebildete Getriebevorrichtung bekannt, die ein sogenanntes reduziertes Drei-Steg-Fünf-Wellen-Getriebe darstellt, welches drei Planetenradsätze umfasst.

Der vorliegenden Erfindung liegt die Aufgabe zugrunde, eine gegenüber einer solchen Getriebevorrichtung lediglich einen geringfügig erhöhten Bauaufwand aufweisende Getriebevorrichtung zu schaffen, mittels der sechs Übersetzungen für Vorwärtsfahrt darstellbar sind und bei der eine elektrische Maschine über einen möglichst großen Betriebsbereich sowohl motorisch als auch generatorisch betreibbar ist.

Erfindungsgemäß wird diese Aufgabe mit einer Getriebevorrichtung mit den Merkmalen des Patentanspruches 1 gelöst.

Die erfindungsgemäße Getriebevorrichtung umfasst eine elektrische Maschine, eine Getriebeeingangswelle, eine Getriebeausgangswelle, eine Mehrzahl von Schaltelementen und vier Planetenradsätze, deren Planetenradsatzwellen derart miteinander gekoppelt sind, dass sechs in der Reihenfolge ihrer Drehzahlordnung als erste, zweite, dritte, vierte, fünfte und sechste Anschlusswelle bezeichnete Anschlusswellen ausgebildet werden. Die Schaltelemente sind dazu eingerichtet, eine Auswahl der Anschlusswellen mit der Getriebeeingangswelle zu verbinden und/oder drehfest festzusetzen. Zusätzlich ist die Getriebeausgangswelle mit der in Drehzahlordnung zweiten Anschlusswelle verbunden. Die als Stege ausgebildeten Planetenradsatzwellen der vier Planetenradsätze sind durch die in Drehzahlordnung dritte Anschlusswelle miteinander verbunden. Ein Rotor der elektrischen Maschine ist an der in Drehzahlordnung sechsten Anschlusswelle angebunden, während die in Drehzahlordnung sechste Anschlusswelle mit Stufenplanetenrädern wenigstens eines der Planetenradsätze in Wirkverbindung steht.

Im Vergleich zu dem im Stand der Technik bekannten Getriebe wird erfindungsgemäß durch das Hinzufügen eines zusätzlichen Planetenradsatzes eine zusätzliche freie Welle bereitgestellt, welche in der gegenständlichen Patentanmeldung als die in Drehzahlordnung fünfte Welle bezeichnet ist. Das Hinzufügen des zusätzlichen Planetenradsatzes erfolgt durch Ausbildung von bestehenden Planetenrädern als Stufenplaneten. Die Planetenräder eines Stufenplanetenradsatzes weisen zwei unterschiedlich große Wirkdurchmesser auf. Wird einem als Stufenplanetenradsatz ausgebildeten Planetenradsatz zu seinem bestehenden Sonnenrad ein weiteres Sonnenrad hinzufügt, wobei jedes der Sonnenräder mit einem anderen Wirkdurchmesser der Planetenräder kämmt, so werden durch den Stufenplanetenradsatz zwei Planetenradsätze gebildet, die einen gemeinsamen Steg und ein gemeinsames Hohlrad aufweisen. In gleicher Weise ist dies durch Hinzufügen eines Hohlrads möglich. Somit ist ein zusätzlicher Planetenradsatz auf einfache Weise und ohne großen Bauaufwand darstellbar. Die zusätzliche Welle erhöht den Freiheitsgrad bei der Gestaltung der Vorwärtsgänge, ohne den Betriebsbereich der elektrischen Maschine einschränken zu müssen. Damit ist während definierter Betriebszustände eines mit der Getriebevorrichtung ausgeführten Fahrzeugantriebsstranges bedarfsgerecht Drehmoment von der elektrischen Maschine in den Kraftfluss des Fahrzeugantriebstranges einleitbar oder während eines generatorischen Betriebes der elektrischen Maschine Energie mit geringem Aufwand rekuperierbar.

Des Weiteren sind in der erfindungsgemäßen Getriebevorrichtung auf bauraum- und kostengünstige Art und Weise aufgrund der als Vier-Steg-Sechs-Wellen-Getriebe-Ausführung zumindest sechs Übersetzungen für Vorwärtsfahrt darstellbar. Eine mit der erfindungsgemäßen Getriebevorrichtung gekoppelte Antriebsmaschine, vorzugsweise eine Brennkraftmaschine, ist somit in gewünschtem Umfang jeweils in einem verbrauchsgünstigen Betriebsbereich betreibbar.

Die erfindungsgemäße Getriebevorrichtung weist vier Planetenradsätze mit insgesamt sechs in Drehzahlordnung als erste, zweite, dritte, vierte, fünfte und sechste Welle bezeichnete Anschlusswellen bzw. Wellen auf. Die Planetengetriebevorrichtung ist somit als ein Vier-Steg-Sechs-Wellen-Getriebe ausgebildet, wobei die sechste Anschlusswelle ständig mit dem Rotor der elektrischen Maschine verbunden ist.

Unter einem Vier-Steg-Sechs-Wellen-Getriebe ist ein Planetengetriebe zu verstehen, das aus vier über genau sechs Koppelwellen kinematisch miteinander gekoppelten Einzel-Planetenradsätzen gebildet ist und bei dem sechs seiner Elemente ("Wellen") für andere Getriebeelemente frei zugänglich sind. Jeweils eine Koppelwelle ist dabei als ständige mechanische Verbindung zwischen einem Element - also Sonnenrad oder Steg oder Hohlrad - eines Einzel-Planetenradsatzes mit einem Element - also Sonnenrad oder Steg oder Hohlrad - eines weiteren Einzel-Planetenradsatzes definiert. Die Anzahl der Einzel-Planetenradsätze und die Anzahl der freien Wellen sind nicht über das optische Erscheinungsbild des Getriebes definiert, sondern über dessen Kinematik. Zur graphischen Darstellung der Kinematik der Getriebevorrichtung wird üblicherweise ein Drehzahlplan der Getriebevorrichtung verwendet, beispielsweise der aus der Getriebelehre bekannte Kutzbachplan.

Bei Anwendung der erfindungsgemäßen Getriebevorrichtung in einem Kraftfahrzeug ist die Getriebeeingangswelle mit einer Welle eines Antriebsaggregates verbunden oder über eine Kupplung damit verbindbar, womit mechanische Leistung des Antriebsaggregates der Getriebeeingangswelle zuführbar ist. Das Antriebsaggregat kann sowohl als Verbrennungskraftmaschine als auch als elektrische Maschine oder als eine Kombination hieraus ausgebildet sein. Die Getriebeausgangswelle dient als Schnittstelle zur Übertragung mechanischer Leistung zu Antriebsrädern des Kraftfahrzeugs.

Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Nachfolgend beschreibt ein Minus-Planetenradsatz einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert. Ein Plus-Planetenradsatz unterscheidet sich zu dem gerade beschriebenen Minus-Planetenradsatz dahingehend, dass der Plus-Planetenradsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Die Standgetriebeübersetzung definiert das Drehzahlverhältnis zwischen Sonnenrad und Hohlrad eines Planetenradsatzes bei drehfestem Steg. Da sich bei einem Minus-Planetenradsatz die Drehrichtung zwischen Sonnenrad und Hohlrad bei drehfestem Steg umkehrt, nimmt die Standgetriebeübersetzung bei einem Minus-Planetenradsatz stets einen negativen Wert an.

Im Drehzahlplan sind in vertikaler Richtung die Drehzahlverhältnisse der einzelnen Anschlusswellen der Planetenradsätze aufgetragen. Die horizontalen Abstände zwischen den Anschlusswellen ergeben sich aus den Übersetzungsverhältnissen zwischen den Anschlusswellen, sodass sich zu einem bestimmten Betriebspunkt gehörende Drehzahlverhältnisse und Drehmomentverhältnisse der Anschlusswellen durch eine Gerade verbinden lassen. Die Übersetzungsverhältnisse zwischen den Anschlusswellen ergeben sich aus den Standgetriebeübersetzungen der beteiligten Planetenradsätze. Der Drehzahlplan ist beispielsweise in Form eines Kutzbachplans darstellbar.

Sechs in Drehzahlordnung als erste, zweite, dritte, vierte, fünfte und sechste Anschlusswelle bezeichnete Anschlusswellen sind dadurch gekennzeichnet, dass die Drehzahlen dieser Anschlusswellen in der genannten Reihenfolge linear ansteigen, abnehmen oder gleich sind. Das bedeutet, dass die Drehzahl der ersten Anschlusswelle jeweils kleiner/gleich der Drehzahl der zweiten Anschlusswelle ist. Die Drehzahl der zweiten Anschlusswelle ist wiederum kleiner/gleich der Drehzahl der dritten Anschlusswelle, während die Drehzahl der dritten Anschlusswelle kleiner/gleich der Drehzahl der vierten Anschlusswelle ist. Zusätzlich bedeutet dies, dass die Drehzahl der vierten Anschlusswelle kleiner/gleich der Drehzahl der fünften Anschlusswelle ist, während die Drehzahl der fünften Anschlusswelle wiederum kleiner/gleich der Drehzahl der sechsten Anschlusswelle ist. Diese Reihenfolge ist auch reversibel, wobei dann die sechste Anschlusswelle die größte Drehzahl aufweist, während die erste Anschlusswelle eine Drehzahl annimmt, die kleiner oder gleich groß wie die Drehzahl der sechsten Anschlusswelle ist. Zwischen den Drehzahlen aller sechs Anschlusswellen besteht dabei stets ein linearer Zusammenhang.

Die Drehzahl einer oder mehrerer Anschlusswellen kann dabei auch negative Werte, oder auch den Wert Null annehmen. Die Drehzahlordnung ist daher stets auf den vorzeichenbehafteten Wert der Drehzahlen zu beziehen, und nicht auf deren Betrag. Das bedeutet, dass die Drehzahlen der Anschlusswellen während der Darstellung der sechs Übersetzungen für Vorwärtsfahrt jeweils in derselben definierten Reihenfolge auf Geraden mit in Abhängigkeit der jeweils eingelegten Übersetzung stehenden Gradienten eines Drehzahlplans liegen. Dies gilt vorliegend auch für in der erfindungsgemäßen Getriebevorrichtung eingelegte Übersetzungen für Rückwärtsfahrt.

Durch Schaltelemente wird, je nach Betätigungszustand, eine Relativbewegung zwischen zwei Bauteilen zugelassen oder eine Verbindung zur Übertragung eines Drehmoments zwischen den zwei Bauteilen hergestellt. Unter einer Relativbewegung ist beispielsweise eine Rotation zweier Bauteile zu verstehen, wobei die Drehzahl des ersten Bauteils und die Drehzahl des zweiten Bauteils voneinander abweichen. Darüber hinaus ist auch die Rotation nur eines der beiden Bauteile denkbar, während das andere Bauteil stillsteht oder in entgegengesetzter Richtung rotiert. Die Schaltelemente sind in der gegenständlichen Erfindung bevorzugt als KlauenSchaltelemente ausgeführt, welche die Verbindung durch Formschluss herstellen.

Zwei Elemente werden insbesondere dann als miteinander verbunden oder miteinander gekoppelt bezeichnet, wenn zwischen den Elementen eine feste, insbesondere drehfeste Verbindung besteht. Derart verbundene bzw. miteinander gekoppelte Elemente drehen mit der gleichen Drehzahl. Die verschiedenen Bauteile und Elemente der genannten Erfindung können dabei über eine Welle beziehungsweise über ein geschlossenes Schaltelement oder ein Verbindungselement, aber auch direkt, beispielsweise mittels einer Schweiß-, Press- oder einer sonstigen Verbindung, miteinander verbunden sein.

Zwei Elemente werden im Weiteren als verbindbar bezeichnet, wenn zwischen diesen Elementen eine lösbare drehfeste Verbindung besteht. Wenn die Verbindung besteht, so drehen solche Elemente mit der gleichen Drehzahl.

Eine elektrische Maschine besteht zumindest aus einem drehfesten Stator und einem drehbar gelagerten Rotor und ist in einem motorischen Betrieb dazu eingerichtet, elektrische Energie in mechanische Energie in Form von Drehzahl und Drehmoment zu wandeln, sowie in einem generatorischen Betrieb mechanische Energie in elektrische Energie in Form von Strom und Spannung zu wandeln.

Unter einer Radsatzebene wird in diesem Zusammenhang eine Ebene verstanden, in der die Elemente Hohlrad, Steg und Sonnenrad eines oder mehrerer Planetenradsätze angeordnet sind. Die Elemente müssen dabei nicht spiegelsymmetrisch entlang dieser Ebene angeordnet sein. Der Begriff Radsatzebene ist vielmehr als eine Bauraum-Ebene auszulegen, durch die die Lage eines oder mehrerer Planetenradsätze im Getriebe gekennzeichnet ist.

Die erfindungsgemäße Getriebevorrichtung kann vorzugsweise Bestandteil eines Hybridantriebsstrangs eines Kraftfahrzeugs sein. Der Hybridantriebsstrang weist neben der Getriebevorrichtung auch eine als Verbrennungskraftmaschine ausgebildete Antriebsmaschine auf, die entweder direkt oder über eine Kupplung mit der Getriebeeingangswelle der Getriebevorrichtung verbunden sein kann bzw. mit dieser verbindbar ist. Das Kraftfahrzeug kann dabei sowohl durch die Verbrennungskraftmaschine als auch durch die elektrische Maschine der Getriebevorrichtung angetrieben werden. Optional weist die Getriebevorrichtung dazu eine weitere elektrische Maschine auf, die dazu eingerichtet ist, über ihren Rotor ein Drehmoment auf die Getriebeeingangswelle abzugeben und derart die Verbrennungskraftmaschine zu starten. Dies hat den Vorteil, dass die Verbrennungskraftmaschine mittels der weiteren elektrischen Maschine gestartet werden kann, ohne Einfluss auf einen zeitgleichen elektrischen Fahrbetrieb zu nehmen, während dem das Kraftfahrzeug allein durch die elektrische Maschine der Getriebevorrichtung angetrieben wird.

Die elektrische Maschine ist dabei mit einem Umformer verbunden, über den die elektrische Maschine mit einem Energiespeicher verbunden ist. Dazu ist jede Form von Energiespeicher geeignet, insbesondere elektrochemische, elektrostatische, hydraulische und mechanische Energiespeicher.

Zusätzlich besteht auch die Möglichkeit, die erfindungsgemäße Getriebevorrichtung in einem Antriebsstrang eines Elektrofahrzeugs zu verwenden. Ein solches Elektrofahrzeug ist beispielsweise mittels einer oder mehrerer elektrischer Maschinen antreibbar und weist dementsprechend keine Brennkraftmaschine auf. Im Bereich der Getriebeeingangswelle ist bei einer solchen Verwendung eine sogenannte TraktionsElektromaschine angebunden. Durch die verschiedenen Übersetzungsstufen der Getriebevorrichtung ist die Traktions-Elektromaschine jeweils in Betriebsbereichen mit hohem Wirkungsgrad betreibbar, wodurch die Energieeffizienz des gesamten Elektrofahrzeugs verbessert wird.

Bei einer konstruktiv einfachen und bauraumgünstigen Ausführungsform der erfindungsgemäßen Getriebevorrichtung sind die als Hohlräder ausgebildeten Planetenradsatzwellen des ersten Planetenradsatzes, des zweiten Planetenradsatzes und des vierten Planetenradsatzes Bestandteile der in Drehzahlordnung zweiten Anschlusswelle und stehen mit den Stufenplanetenrädern in Eingriff.

Sind die als Sonnenräder ausgeführten Planetenradsatzwellen des dritten Planetenradsatzes und des vierten Planetenradsatzes Bestandteile der in Drehzahlordnung ersten Anschlusswelle, weist die erfindungsgemäße Getriebevorrichtung bei gleichzeitig geringem Bauraumbedarf eine hohe Integrationstiefe auf. Zusätzlich wird dadurch die Komplexität der Getriebevorrichtung reduziert, wodurch sowohl die Herstellung als auch die Montage des Getriebes vereinfacht wird.

Wenn die als Hohlrad ausgebildete Planetenradsatzwelle des dritten Planetenradsatzes Bestandteil der in Drehzahlordnung vierten Anschlusswelle ist, ist die Getriebevorrichtung ebenfalls durch eine hohe Integrationstiefe gekennzeichnet und benötigt lediglich wenig Bauraum.

Die als Sonnenrad ausgeführte Planetenradsatzwelle des ersten Planetenradsatzes ist bei einer konstruktiv einfachen und bauraumgünstigen Ausführungsform der erfindungsgemäßen Getriebevorrichtung Bestandteil der in Drehzahlordnung sechsten Anschlusswelle und steht mit den Stufenplanetenrädern in Eingriff.

Wiederum die als Sonnenrad ausgeführte Planetenradsatzwelle des zweiten Planetenradsatzes kämmt bei einer Ausführungsform der erfindungsgemäßen Getriebevorrichtung, bei der die sechs Übersetzungen für Vorwärtsfahrt auf bauraumgünstige Art und Weise darstellbar sind, mit den Stufenplanetenrädern und ist Bestandteil der in Drehzahlordnung fünften Anschlusswelle.

Die erfindungsgemäße Getriebevorrichtung umfasst bei einer Weiterbildung der erfindungsgemäßen Getriebevorrichtung, bei der die Schaltelemente mit geringem konstruktivem Aufwand betätigbar sind, ein erstes Schaltelement, ein zweites Schaltelement, ein drittes Schaltelement, ein viertes Schaltelement und ein fünftes Schaltelement, wobei durch Schließen des ersten Schaltelements die Getriebeeingangswelle mit der in Drehzahlordnung ersten Anschlusswelle verbindbar ist, durch Schließen des zweiten Schaltelements die in Drehzahlordnung fünfte Anschlusswelle drehfest festsetzbar ist, durch Schließen des dritten Schaltelements die in Drehzahlordnung vierte Anschlusswelle drehfest festsetzbar ist, durch Schließen des vierten Schaltelements die in Drehzahlordnung dritte Anschlusswelle drehfest festsetzbar ist, und durch Schließen des fünften Schaltelements die Getriebeeingangswelle mit der in Drehzahlordnung dritten Anschlusswelle verbindbar ist.

Bei einer durch eine gute Schaltbarkeit gekennzeichneten Ausführungsform der erfindungsgemäßen Getriebevorrichtung sind durch selektives paarweises Schließen der Schaltelemente zumindest sechs Vorwärtsgänge zwischen der Getriebeeingangswelle und der Getriebeausgangswelle bereitstellbar, wobei sich der erste Vorwärtsgang durch Schließen des ersten Schaltelements und des vierten Schaltelements, der zweite Vorwärtsgang durch Schließen des ersten Schaltelements und des dritten Schaltelements, der dritte Vorwärtsgang durch Schließen des ersten Schaltelements und des zweiten Schaltelements, der vierte Vorwärtsgang durch Schließen des ersten Schaltelements und des fünften Schaltelements, der fünfte Vorwärtsgang durch Schließen des zweiten Schaltelements und des fünften Schaltelements, und der sechste Vorwärtsgang sich durch Schließen des dritten Schaltelements und des fünften Schaltelements ergibt.

Sind das erste bis fünfte Schaltelement als formschlüssige Schaltelemente ausgebildet, werden in geöffnetem Betriebszustand der Schaltelemente geringere Verlustleistungen generiert als bei der Ausführung der Schaltelemente als reibschlüssige Schaltelemente.

Ist das erste, dritte, vierte und fünfte Schaltelement jeweils als kraftschlüssiges Schaltelement ausgebildet und ist das zweite Schaltelement als formschlüssiges Schaltelement ausgebildet, sind Übersetzungswechsel, an welchen das erste, dritte, vierte und fünfte Schaltelement beteiligt sind, gegebenenfalls zugkraftunterbrechungsfrei durchführbar, während im Bereich des zweiten Schaltelements wiederum in geöffnetem Betriebszustand geringe Verlustleistungen auftreten. Des Weiteren besteht auch die Möglichkeit, die reibschlüssigen Schaltelemente, d. h. das erste, dritte, vierte und fünfte Schaltelement in Abhängigkeit des jeweils vorliegenden Anwendungsfalles als Anfahrelement zu nutzen.

Bei einer wiederum weiteren Ausführungsform der erfindungsgemäßen Getriebevorrichtung ist ein sechstes Schaltelement vorgesehen, wobei durch Schließen des sechsten Schaltelements die in Drehzahlordnung sechste Anschlusswelle mit der Getriebeeingangswelle verbindbar ist, und wobei sich ein erster Rückwärtsgang durch Schließen des sechsten Schaltelements und des vierten Schaltelements ergibt und/oder sich ein zweiter Rückwärtsgang durch Schließen des sechsten Schaltelements und des dritten Schaltelements ergibt. Damit ist neben den sechs Übersetzungen für Vorwärtsfahrt auf konstruktiv einfache und bauraumgünstige Art und Weise zusätzlich wenigstens ein Rückwärtsgang darstellbar.

Ist das sechste Schaltelement als formschlüssiges Schaltelement ausgebildet, entstehen im Bereich des in geöffnetem Betriebszustand vorliegenden sechsten Schaltelements wiederum lediglich geringe Verlustleistungen, wodurch die Verwendung der erfindungsgemäßen Getriebevorrichtung einen Kraftstoffverbrauch einer als Brennkraftmaschine ausgeführten Antriebsmaschine eines Fahrzeugantriebsstrangs in gewünschtem Umfang begrenzt.

Der erste, der zweite und der dritte Planetenradsatz sind bei einer weiteren vorteilhaften Ausführungsform der erfindungsgemäßen Getriebevorrichtung als MinusPlanetenradsätze ausgebildet, während der vierte Planetenradsatz als PlusPlanetenradsatz ausgeführt ist.

Sind die als Hohlräder ausgebildeten Planetenradsatzwellen des ersten, zweiten und vierten Planetenradsatzes als ein einziges Hohlrad ausgebildet, ist die erfindungsgemäße Getriebevorrichtung durch eine hohe Integrationstiefe gekennzeichnet und weist neben einem geringen Bauraumbedarf auch ein niedriges Bauteilgewicht auf.

Die als Sonnenräder wirkenden Planetenradsatzwellen des dritten und des vierten Planetenradsatzes sind bei einer weiteren bauraumgünstigen und durch ein niedriges Bauteilgewicht gekennzeichneten Ausführungsform der erfindungsgemäßen Getriebevorrichtung als ein einziges Sonnenrad ausgebildet.

Bei einer weiteren vorteilhaften Ausführungsform der erfindungsgemäßen Getriebevorrichtung ist die Getriebeeingangswelle mit einem Rotor einer weiteren elektrischen Maschine gekoppelt, womit eine mit der Getriebeeingangswelle wirkverbundene Antriebsmaschine mit geringem Aufwand über die weitere elektrische Maschine startbar ist. Zusätzlich hierzu oder alternativ dazu ist im Bereich der weiteren elektrischen Maschine während eines generatorischen Betriebes, während dem die weitere elektrische Maschine durch die Antriebsmaschine angetrieben wird, elektrische Energie erzeugbar, mit der beispielsweise die elektrische Maschine während eines motorischen Betriebes versorgbar ist, um ein mit der erfindungsgemäßen Getriebevorrichtung ausgeführtes Fahrzeug elektrisch antreiben zu können.

Sowohl die in den Patentansprüchen angegebenen Merkmale als auch die in den nachfolgenden Ausführungsbeispielen der erfindungsgemäßen Getriebevorrichtung angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen der erfindungsgemäßen Getriebevorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
Fig. 1 ein Räderschema eines ersten Ausführungsbeispiels der erfindungsgemäßen Getriebevorrichtung in Front-Quer-Bauweise;
Fig. 2 eine Teilseitenansicht der Planetenradsätze der Getriebevorrichtung gemäß Fig. 1;
Fig. 3 eine Fig. 1 entsprechende Darstellung einer zweiten Ausführungsform der erfindungsgemäßen Getriebevorrichtung in Längsanordnung;
Fig. 4 ein Schaltschema der Getriebevorrichtung gemäß Fig. 1 bzw. gemäß Fig. 2; und
Fig. 5 einen Drehzahlplan der Getriebevorrichtungen gemäß Fig. 1 und Fig. 2.

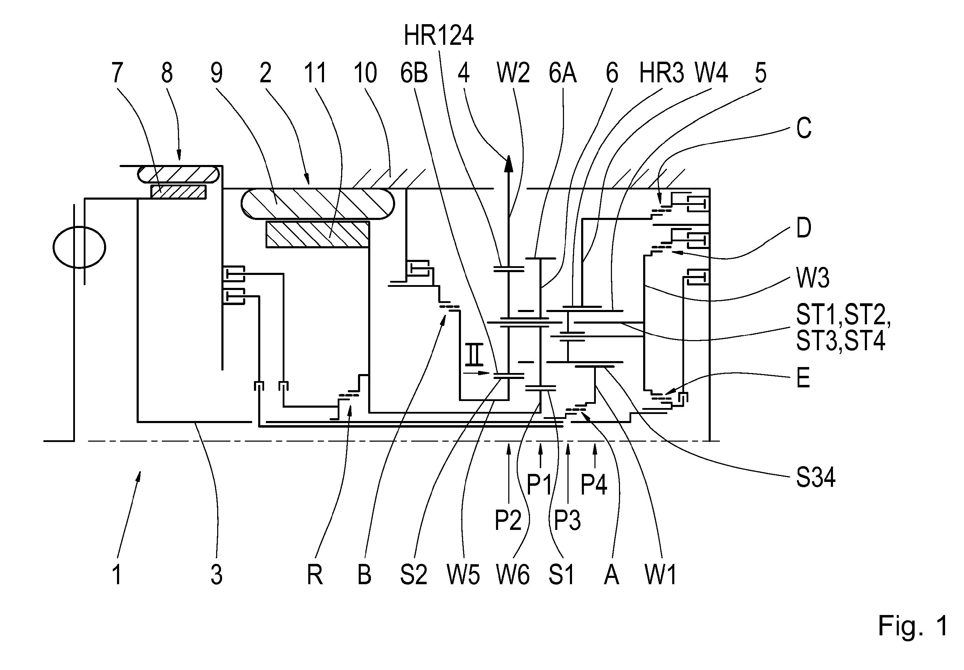

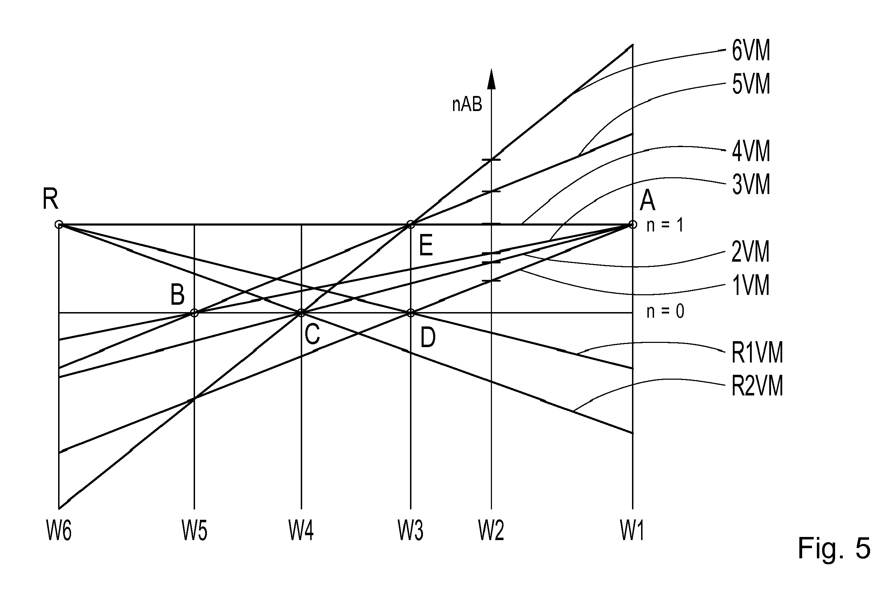

In Fig. 1 ist eine erste Ausführungsform einer Getriebevorrichtung 1 mit einer elektrischen Maschine 2, mit einer Getriebeeingangswelle 3, mit einer Getriebeausgangswelle 4 und mit vier Planetenradsätzen P1 bis P4 dargestellt, die als sogenannte 4-Steg-6-Wellen-Getriebe ausgeführt ist. Die vier Planetenradsätze P1 bis P4 umfassen sechs Anschlusswellen W1 bis W6. Des Weiteren sind die Planetenradsätze P1 bis P3 jeweils als Minus-Planetenradsätze ausgebildet, während der Planetenradsatz P4 als ein Plus-Planetenradsatz ausgeführt ist. Zur Darstellung von wenigstens sechs Übersetzungen für Vorwärtsfahrt 1VM bis 6VM und zwei Übersetzungen für Rückwärtsfahrt R1VM, R2VM sind Planetenradsatzwellen, d. h. Hohlräder, Stege und/oder Sonnenräder, der Planetenradsätze P1 bis P4 miteinander gekoppelt, dass die sechs in der Reihenfolge ihrer Drehzahlordnung als erste, zweite, dritte, vierte, fünfte und sechste Anschlusswelle bezeichneten Anschlusswellen W1 bis W6 gebildet werden. Darüber hinaus liegen Drehzahlen der Anschlusswellen W1 bis W6 während der Darstellung der sechs Übersetzungen für Vorwärtsfahrt jeweils in derselben definierten Reihenfolge auf Geraden mit in Abhängigkeit der jeweils eingelegten Übersetzung stehenden Gradienten eines in Fig. 5 näher gezeigten Drehzahlplans.

Ein Stator 9 der elektrischen Maschine 2 ist drehfest mit einem Getriebegehäuse 10 der Getriebevorrichtung 1 oder mit einem anderen drehfesten Bauelement der Getriebevorrichtung 1 verbunden, sodass der Stator 9 keine Drehzahl annehmen kann. Ein drehbar gelagerter Rotor 11 der elektrischen Maschine 2 ist über die sechste Anschlusswelle W6 mit dem Sonnenrad S1 des ersten Planetenradsatzes P1 verbunden.

Die als gemeinsames Hohlrad HR124 ausgeführten Hohlräder HR1, HR2 und HR4 des ersten Planetenradsatzes P1, des zweiten Planetenradsatzes P2 und des vierten Planetenradsatzes P4 sind Bestandteile der in Drehzahlordnung zweiten Anschlusswelle W2, welche mit der Getriebeausgangswelle 4 ständig gekoppelt ist. Wiederum die als gemeinsames Sonnenrad S34 ausgeführten S3, S4 des dritten Planetenradsatzes P3 und des vierten Planetenradsatzes P4 sind Bestandteile der in Drehzahlordnung ersten Anschlusswelle W1. Eine als Hohlrad HR3 ausgebildete Planetenradsatzwelle des dritten Planetenradsatzes P3 ist Bestandteil der in Drehzahlordnung vierten Anschlusswelle W4, die über das Schaltelement C gehäuseseitig drehfest darstellbar ist, und kämmt mit Planetenrädern 5, die wiederum mit Stufenplanetenrädern 6 in Eingriff stehen.

Die in Drehzahlordnung sechste Anschlusswelle W6 umfasst eine als Sonnenrad S1 ausgeführte Planetenradsatzwelle des ersten Planetenradsatzes P1. Des Weiteren stehen die Stufenplanetenräder 6 mit dem gemeinsamen Hohlrad HR124 ausgeführten Planetenradsatzwelle des zweiten Planetenradsatzes P2 in Eingriff. Eine als Sonnenrad S2 ausgebildete Planetenradsatzwelle des zweiten Planetenradsatzes P2 kämmt ebenfalls mit den Stufenplanetenrädern 6 und ist Bestandteil der in Drehzahlordnung fünften Anschlusswelle W5, die über das Schaltelement B drehfest darstellbar ist. Als zusammengefasste Stege ST1 bis ST4 ausgebildete Planetenradsatzwellen der vier Planetenradsätze P1 bis P4 sind Bestandteil der in Drehzahlordnung dritten Anschlusswelle W3, die über das Schaltelement E mit der Getriebeeingangswelle 3 verbindbar und über das Schaltelement D drehfest festsetzbar ist.

Die mit der elektrischen Maschine 2 wirkverbundene und in Drehzahlordnung sechste Anschlusswelle W6 der Planetenradsätze P1 bis P4 ist über das Schaltelement R mit der Getriebeeingangswelle 3 verbindbar. Zusätzlich ist die in Drehzahlordnung erste Anschlusswelle W1 über das Schaltelement A mit der Getriebeeingangswelle 3 in Wirkverbindung bringbar. Des Weiteren ist die Getriebeeingangswelle 3 mit einem Rotor 7 einer weiteren elektrischen Maschine 8 gekoppelt.

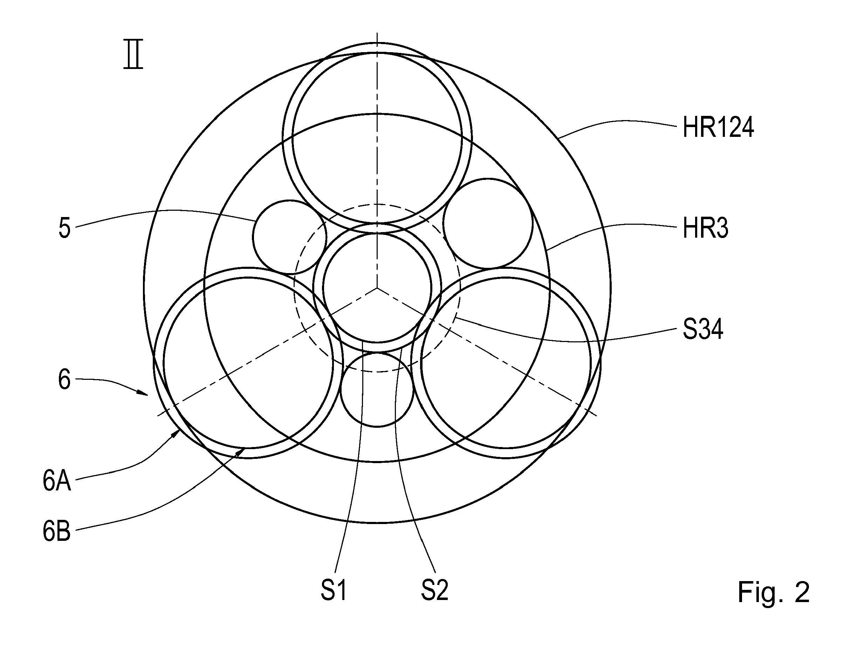

Fig. 2 zeigt eine stark schematisierte Ansicht der Planetenradsätze P1 bis P4 aus einer in Fig. 1 näher gekennzeichneten Ansicht 11. Aus der Darstellung gemäß Fig. 2 geht hervor, dass die Planetenräder 5 mit einem einen größeren Durchmesser aufweisenden Bereich 6A der Stufenplaneten 6 in Eingriff stehen, der mit dem Sonnenrad S1 des ersten Planetenradsatzes P1 kämmt, während die Stufenplanetenräder 6 mit einem durch einen kleineren Durchmesser gekennzeichneten Bereich 6B sowohl mit dem Sonnenrad S2 des zweiten Planetenradsatzes P2 als auch mit dem als gemeinsamen Hohlrad HR124 des ersten Planetenradsatzes P1, des zweiten Planetenradsatzes P2 und des vierten Planetenradsatzes P4 kämmen. Die als gemeinsame Sonne S34 ausgebildeten Sonnenräder S3, S4 des dritten und vierten Planetenradsatzes P3, P4 kämmen mit den Planetenrädern 5, welche in weiterer Folge mit dem Hohlrad HR3 des dritten Planetenradsatzes P3 kämmen.

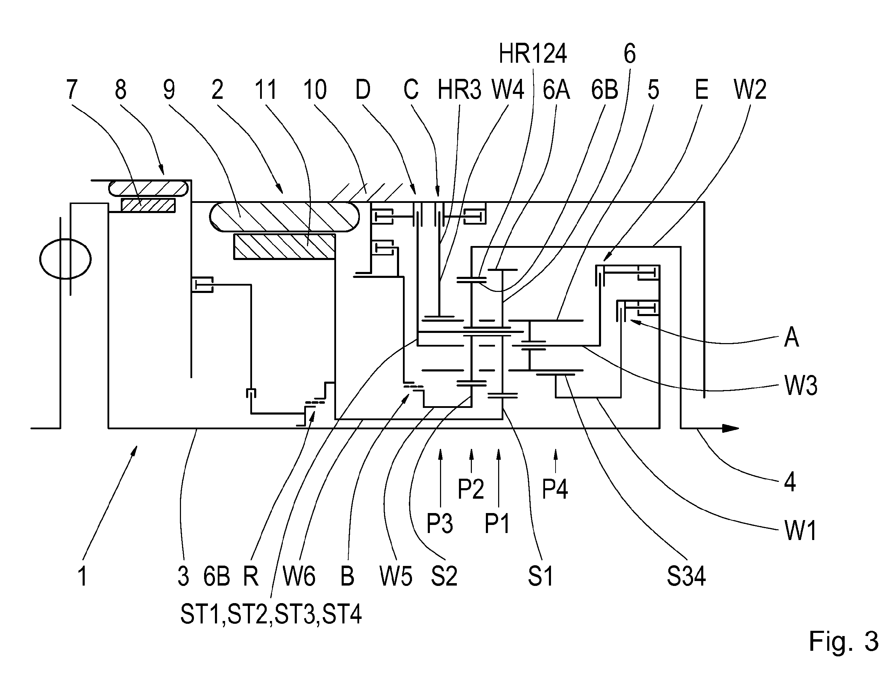

Eine zweite Ausführungsform der Getriebevorrichtung 1 ist in Fig. 3 dargestellt, mittels der im Wesentlichen derselbe Funktionsumfang wie mit der ersten Ausführungsform der Getriebevorrichtung 1 gemäß Fig. 1 darstellbar ist. Bei der Getriebevorrichtung 1 gemäß Fig. 3 ist der Getriebeausgang koaxial zum Getriebeeingang angeordnet, weshalb die Getriebevorrichtung 1 gemäß Fig. 3 bevorzugt in Fahrzeuglängsrichtung verlaufend in einem Fahrzeug anzuordnen ist.

Die weitere elektrische Maschine 8 ist bei der Getriebevorrichtung 1 gemäß Fig. 3 als Starter-Generator ausgeführt, mittels dem eine mit der Getriebeeingangswelle 3 in Wirkverbindung stehende Antriebsmaschine, beispielsweise eine Brennkraftmaschine, aus einem abgeschalteten Betriebszustand heraus startbar ist.

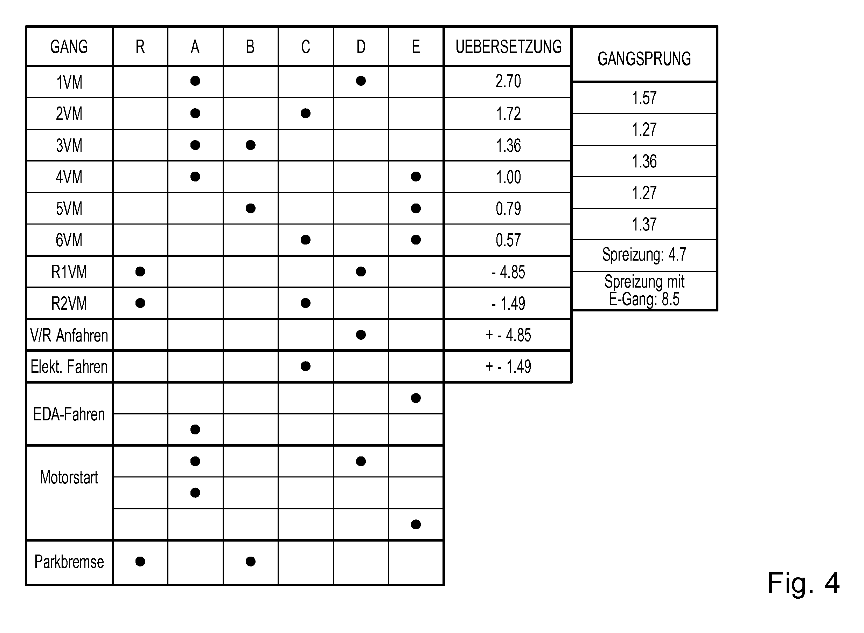

Fig. 4 zeigt ein Schaltschema der beiden Ausführungsformen der Getriebevorrichtung 1 gemäß Fig. 1 und Fig. 3, während in Fig. 5 ein Drehzahlplan der beiden Ausführungsformen der Getriebevorrichtung 1 dargestellt ist. Dabei sind in Fig. 5 in vertikaler Richtung die Drehzahlen der sechs Anschlusswellen W1 bis W6 der Planetenradsätze P1 bis P4 im Verhältnis zur Drehzahl nAB der Getriebeeingangswelle 2 aufgetragen. Die maximal auftretende Drehzahl der Getriebeeingangswelle 2 ist auf den Wert 1 normiert. Die Abstände zwischen den sechs Anschlusswellen W1 bis W6 der Planetenradsätze P1 bis P4 ergeben sich durch die Standgetriebeübersetzungen der vier Planetenradsätze P1 bis P4. Zu einem bestimmten Betriebspunkt gehörende Drehzahlverhältnisse lassen sich jeweils durch eine Gerade verbinden.

In dem in Fig. 4 gezeigten Schaltschema sind die jeweils zur Darstellung eines definierten Betriebszustands der Getriebevorrichtung 1 in geschlossenem Betriebszustand vorliegenden Schaltelemente A bis E und R durch Kreise gekennzeichnet. Zusätzlich sind dem Schaltschema die jeweiligen Übersetzungswerte der einzelnen Gangstufen 1VM bis 6VM und R1VM, R2VM und die daraus zu bestimmenden Gangsprünge zum nächsthöheren Gang entnehmbar. Die Übersetzungswerte ergeben sich aus den beispielhaft vorgegebenen Standgetriebeübersetzungen der Planetenradsätze P1 bis P4. Bei sequentieller Schaltweise können Doppelschaltungen bzw. Gruppenschaltungen vermieden werden, da zwei benachbarte Gangstufen ein Schaltelement gemeinsam benutzen. Die verschiedenen Gänge bzw. Übersetzungen der Getriebevorrichtung 1 sind in den verschiedenen Zeilen des Schaltschemas dargestellt.

Bei der in Fig. 1 dargestellten ersten Ausführungsform der Getriebevorrichtung 1 sind alle Schaltelemente A bis E und R als formschlüssige Schaltelemente, insbesondere als Klauenschaltelemente, ausgeführt. Im Unterschied hierzu sind bei der zweiten Ausführungsform der Getriebevorrichtung 1 gemäß Fig. 3 die Schaltelemente A, C, D und E als reibschlüssige Schaltelemente ausgebildet, während die Schaltelemente B und R wiederum formschlüssige Schaltelemente sind.

Aufgrund der Ausführung der Getriebevorrichtung 1 gemäß Fig. 1 mit formschlüssigen Schaltelementen ist die Getriebevorrichtung 1 in vorteilhafter Weise mit der weiteren elektrischen Maschine 8 ausgeführt, die zumindest als Starter-Generator ausgebildet ist. Unabhängig von der Ausführung der Schaltelemente A bis E und R als form- oder reibschlüssige Schaltelemente sind die Schaltelemente B und C, die Schaltelemente D und E sowie die Schaltelemente R und A auf bauraum- und kostengünstige Art und Weise mit sogenannten doppelt wirkenden Aktoren betätigbar.

Bei beiden Ausführungsformen der Getriebevorrichtung 1 sind sechs Übersetzungen 1 VM bis 6VM für Vorwärtsfahrt zwischen der Getriebeeingangswelle 3 und der Getriebeausgangswelle 4 darstellbar. Ein erster Vorwärtsgang 1VM zwischen der Getriebeeingangswelle 3 und der Getriebeausgangswelle 4 ergibt sich durch Schließen des Schaltelements A und des Schaltelements D. Ein zweiter Vorwärtsgang 2VM ist in der Getriebevorrichtung 1 eingelegt, wenn das erste Schaltelement A und gleichzeig das Schaltelement C geschlossen sind. Der dritte Vorwärtsgang 3VM ist dann in der Getriebevorrichtung 1 eingelegt, wenn die Schaltelemente A und B geschlossen sind. Sind in der Getriebevorrichtung 1 das Schaltelement A und das Schaltelement E gleichzeitig in geschlossenen Betriebszustand überführt, wird in der Getriebevorrichtung 1 der vierte Vorwärtsgang 4VM dargestellt. Liegt eine entsprechende Anforderung zum Einlegen des fünften Vorwärtsgangs 5VM vor, sind das Schaltelement B und das Schaltelement E in geschlossenen Betriebszustand zu überführen. Der sechste Vorwärtsgang 6VM ist in der Getriebevorrichtung 1 eingelegt, wenn die Schaltelemente C und E gleichzeitig in geschlossenem Betriebszustand vorliegen.

Soll ein mit der Getriebevorrichtung 1 ausgeführtes Fahrzeug in Rückwärtsfahrtrichtung bewegt werden, sind entweder die Schaltelemente R und D oder die Schaltelemente R und C gleichzeitig in geschlossenem Betriebszustand zu halten oder in diesen zu überführen.

Ist das Schaltelement D als reibschlüssiges Schaltelement ausgebildet, kann dieses bei den jeweils über das Schaltelement D dargestellten Übersetzungen für Vorwärtsoder Rückwärtsfahrt als Anfahrelement verwendet werden.

Liegt lediglich das Schaltelement C in geschlossenem Betriebszustand vor, ist über die elektrische Maschine 2 der Getriebevorrichtung 1 ein elektrischer Fahrbetrieb darstellbar. Zusätzlich besteht bei lediglich geschlossenem Schaltelement E oder A die Möglichkeit, über die Getriebevorrichtung 1 einen sogenannten EDA-Fahrbetrieb darzustellen, über den hauptsächlich verschleißfreie Anfahrvorgänge realisiert werden, wobei die elektrische Maschine 2 und/oder die weitere elektrische Maschine 8 bei geschlossenem Schaltelement E vorzugsweise generatorisch betrieben werden, während die elektrische Maschine 2 und/oder die weitere elektrische Maschine 8 bei geschlossenem Schaltelement A und gleichzeitig aktiviertem EDA-Fahrbetrieb motorisch betrieben werden.

Liegen zumindest die Schaltelemente A bis E in geöffnetem Betriebszustand vor, ist eine mit der Getriebeeingangswelle 3 wirkverbundene Antriebsmaschine, die vorzugsweise als Brennkraftmaschine ausgebildet sein kann, über die weitere elektrische Maschine 8 in an sich bekannter Art und Weise während eines motorischen Betriebs der weiteren elektrischen Maschine 8 startbar. Im Unterschied hierzu ist eine solche Antriebsmaschine bei gleichzeitig geschlossenen Schaltelementen A und D sowohl über die weitere elektrische Maschine 8 als auch die elektrische Maschine 2 zuschaltbar bzw. in einen zugeschalteten Betriebszustand überführbar. Soll eine mit der Getriebeeingangswelle 3 wirkverbundene Antriebsmaschine eines Fahrzeugantriebsstrangs bei lediglich geschlossenem Schaltelement A oder E zugeschaltet werden, ist die elektrische Maschine 2 und/oder die weitere elektrische Maschine 8 bei gleichzeitig betätigter Feststellbremse motorisch zu betreiben.

Um bei Vorliegen einer entsprechenden Anforderung zur Darstellung einer Parkbremse die Getriebeausgangswelle 4 im erforderlichen Umfang drehfest darstellen zu können, wird durch Schließen der als Klauenschaltelemente ausgebildeten Schaltelemente R und B eine Wirkverbindung mit einer als Brennkraftmaschine ausgeführten Antriebsmaschine wie bei Fahrzeugen mit Handschaltgetrieben im Bereich eines Schaltgetriebes realisiert, bei welchen diese Wirkverbindung durch Einlegen einer Übersetzung herstellbar ist.

Grundsätzlich ist bei einer Ausführung des Schaltelements C als reibschlüssiges Schaltelement in der Getriebevorrichtung 1 gemäß Fig. 3 eine Lastschaltung vom ersten in den zweiten elektrischen Gang möglich. Vorzugsweise besteht auch die Möglichkeit, einen mit der Getriebeeingangswelle 3 verbundenen Verbrennungsmotor über das Schaltelement A anzuschleppen. Im zweiten elektrischen Fahrgang, zu dem das Schaltelement C geschlossen ist, könnte ein Schleppstart einer mit der Getriebeeingangswelle 3 wirkverbundenen Antriebsmaschine auch über das als reibschlüssiges Schaltelement ausgeführte Schaltelement E erfolgen.

Über ein als reibschlüssiges Schaltelement ausgeführtes Schaltelement E ist prinzipiell auch eine Lastschaltung ausgehend vom zweiten Vorwärtsgang 2VM in den dritten Vorwärtsgang 3VM bzw. in den vierten Vorwärtsgang 4VM möglich bzw. unterstützbar, während über das als Reibschaltelement ausgebildete Schaltelement C eine Lastschaltung zwischen dem ersten Vorwärtsgang 1VM und dem zweiten Vorwärtsgang 2VM bzw. dem vierten Vorwärtsgang 4VM und dem fünften Vorwärtsgang 5VM bzw. zwischen dem vierten Vorwärtsgang 4VM, der in den vorliegend betrachteten Ausführungsbeispielen der Getriebevorrichtung 1 ein Direktgang ist, und dem sechsten Vorwärtsgang 6VM oder zwischen dem fünften Vorwärtsgang 5VM und dem sechsten Vorwärtsgang 6VM als Lastschaltung möglich bzw. unterstützbar ist.

### Bezugszeichen

- 1: Getriebevorrichtung
- 2: elektrische Maschine
- 3: Getriebeeingangswelle
- 4: Getriebeausgangswelle
- 5: Planetenräder
- 6: Stufenplanetenräder
- 6A, B: Bereich der Stufenplanetenräder
- 7: Rotor
- 8: weitere elektrische Maschine
- 9: Stator
- 10: Getriebegehäuse
- 11: Rotor
- A bis E, R: Schaltelement
- P1 bis P4: Planetenradsatz
- W1 bis W6: Anschlusswelle
- HR1 bis HR4, HR124: Hohlrad
- S1 bis S4, S34: Sonnenrad
- ST1 bis ST4: Steg
- 1VM bis 6VM: Vorwärtsgang
- R1VM, R2VM: Rückwärtsgang

## Patentansprüche

1. Getriebevorrichtung (1)
- mit einer elektrischen Maschine (2),
- mit einer Getriebeeingangswelle (3),
- mit einer Getriebeausgangswelle (4),
- mit einer Mehrzahl von Schaltelementen (A bis E, R),
- und mit vier Planetenradsätzen (P1 bis P4), deren Planetenradsatzwellen (HR1 bis HR4, S1 bis S4, ST1 bis ST4) derart miteinander gekoppelt sind, dass sechs in der Reihenfolge ihrer Drehzahlordnung als erste, zweite, dritte, vierte, fünfte und sechste Anschlusswelle bezeichnete Anschlusswellen (W1 bis W6) ausgebildet werden,
- wobei die Schaltelemente (A bis E, R) dazu eingerichtet sind eine Auswahl der Anschlusswellen (W1, W3 bis W6) mit der Getriebeeingangswelle (3) zu verbinden und/oder drehfest festzusetzen,
- wobei die Getriebeausgangswelle (4) mit der in Drehzahlordnung zweiten Anschlusswelle (W2) verbunden ist,
- wobei die als Stege ausgebildeten Planetenradsatzwellen (ST1 bis ST4) der vier Planetenradsätze (P1 bis P4) durch die in Drehzahlordnung dritte Anschlusswelle (W3) miteinander verbunden sind,
- wobei ein Rotor (11) der elektrischen Maschine (2) an der in Drehzahlordnung sechsten Anschlusswelle (W6) angebunden ist,
- und wobei die in Drehzahlordnung sechste Anschlusswelle (W6) mit Stufenplanetenrädern (6) wenigstens eines der Planetenradsätze (P1, P2) in Wirkverbindung steht.

2. Getriebevorrichtung (1) nach Anspruch 1, **dadurch gekennzeichnet, dass** die als Hohlräder ausgebildeten Planetenradsatzwellen (HR1, HR2, HR4) des ersten Planetenradsatzes (P1), des zweiten Planetenradsatzes (P2) und des vierten Planetenradsatzes (P4) Bestandteile der in Drehzahlordnung zweiten Anschlusswelle (W2) sind und mit den Stufenplanetenrädern (6) in Eingriff stehen.

3. Getriebevorrichtung (1) nach Anspruch 1 oder Anspruch 2, **dadurch gekennzeichnet, dass** die als Sonnenräder ausgeführten Planetenradsatzwellen (S3, S4) des dritten Planetenradsatzes (P3) und des vierten Planetenradsatzes (P4) Bestandteile der in Drehzahlordnung ersten Anschlusswelle (W1) sind.

4. Getriebevorrichtung (1) nach einem der vorangehenden Ansprüche, **dadurch gekennzeichnet, dass** die als Hohlrad ausgebildete Planetenradsatzwelle (HR3) des dritten Planetenradsatzes (P3) Bestandteil der in Drehzahlordnung vierten Anschlusswelle (W4) ist.

5. Getriebevorrichtung (1) nach einem der Ansprüche 1 bis 4, **dadurch gekennzeichnet, dass** die als Sonnenrad ausgeführte Planetenradsatzwelle (S1) des ersten Planetenradsatzes (P1) Bestandteil der in Drehzahlordnung sechsten Anschlusswelle (W6) ist und mit den Stufenplanetenrädern (6) in Eingriff steht.

6. Getriebevorrichtung (1) nach einem der Ansprüche 1 bis 5, **dadurch gekennzeichnet, dass** die als Sonnenrad ausgebildete Planetenradsatzwelle (S2) des zweiten Planetenradsatzes (P2) Bestandteil der in Drehzahlordnung fünften Anschlusswelle (W5) ist und mit den Stufenplanetenrädern (6) in Eingriff steht.

7. Getriebevorrichtung (1) nach einem der Ansprüche 1 bis 6, **dadurch gekennzeichnet, dass** die Schaltelemente (A bis E, R) ein erstes Schaltelement (A), ein zweites Schaltelement (B), ein drittes Schaltelement (C), ein viertes Schaltelement (D), und ein fünftes Schaltelement (E) umfassen, wobei
- durch Schließen des ersten Schaltelements (A) die Getriebeeingangswelle (3) mit der in Drehzahlordnung ersten Anschlusswelle (W1) verbindbar ist,
- durch Schließen des zweiten Schaltelements (B) die in Drehzahlordnung fünfte Anschlusswelle (W5) drehfest festsetzbar ist,
- durch Schließen des dritten Schaltelements (C) die in Drehzahlordnung vierte Anschlusswelle (W4) drehfest festsetzbar ist,
- durch Schließen des vierten Schaltelements (D) die in Drehzahlordnung dritte Anschlusswelle (W3) drehfest festsetzbar ist, und
- durch Schließen des fünften Schaltelements (E) die Getriebeeingangswelle (3) mit der in Drehzahlordnung dritten Anschlusswelle (W3) verbindbar ist.

8. Getriebevorrichtung (1) nach Anspruch 7, **dadurch gekennzeichnet, dass** durch selektives paarweises Schließen der Schaltelemente (A bis E, R) zumindest sechs Vorwärtsgänge (1VM bis 6VM) zwischen der Getriebeeingangswelle (3) und der Getriebeausgangswelle (4) bereitstellbar sind, wobei sich
- der erste Vorwärtsgang (1VM) durch Schließen des ersten Schaltelements (A) und des vierten Schaltelements (D),
- der zweite Vorwärtsgang (2VM) durch Schließen des ersten Schaltelements (A) und des dritten Schaltelements (C),
- der dritte Vorwärtsgang (3VM) durch Schließen des ersten Schaltelements (A) und des zweiten Schaltelements (B),
- der vierte Vorwärtsgang (4VM) durch Schließen des ersten Schaltelements (A) und des fünften Schaltelements (E),
- der fünfte Vorwärtsgang (5VM) durch Schließen des zweiten Schaltelements (B) und des fünften Schaltelements (E), und
- der sechste Vorwärtsgang (6VM) sich durch Schließen des dritten Schaltelements (C) und des fünften Schaltelements (E) ergibt.

9. Getriebevorrichtung (1) nach Anspruch 7 oder Anspruch 8, **dadurch gekennzeichnet, dass** das erste bis fünfte Schaltelement (A bis E) als formschlüssige Schaltelemente ausgebildet sind.

10. Getriebevorrichtung (1) nach Anspruch 7 oder Anspruch 8, **dadurch gekennzeichnet, dass** das erste, dritte, vierte und fünfte Schaltelement (A, C, D, E) als kraftschlüssige Reibschaltelemente ausgebildet sind und das zweite Schaltelement (B) als formschlüssiges Schaltelement ausgebildet ist.

11. Getriebevorrichtung (1) nach einem der vorangehenden Ansprüche, **dadurch gekennzeichnet, dass** die die Schaltelemente (A bis E, R) ein sechstes Schaltelement (R) umfassen, wobei durch Schließen des sechsten Schaltelements (R) die in Drehzahlordnung sechste Anschlusswelle (W6) mit der Getriebeeingangswelle (3) verbindbar ist, wobei sich
- ein erster Rückwärtsgang (R1VM) durch Schließen des sechsten Schaltelements (R) und des vierten Schaltelements (D) ergibt, und/oder sich
- ein zweiter Rückwärtsgang (R2VM) durch Schließen des sechsten Schaltelements (R) und des dritten Schaltelements (C) ergibt.

12. Getriebevorrichtung (1) nach Anspruch 11, **dadurch gekennzeichnet, dass** das sechste Schaltelement (R) als formschlüssiges Schaltelement ausgebildet ist.

13. Getriebevorrichtung (1) nach einem der vorangehenden Ansprüche, **dadurch gekennzeichnet, dass** der erste, der zweite und der dritte Planetenradsatz (P1, P2, P3) als Minus-Planetenradsätze ausgebildet sind, wobei der vierte Planetenradsatz (P4) als Plus-Planetenradsatz ausgebildet ist.

14. Getriebevorrichtung (1) nach Anspruch 13, **dadurch gekennzeichnet, dass** die als Hohlräder wirkenden Planetenradsatzwellen (HR1, HR2, HR4) des ersten, zweiten und vierten Planetenradsatzes (P1, P2, P4) als ein einziges Hohlrad (HR124) ausgebildet sind.

15. Getriebevorrichtung (1) nach Anspruch 13 oder Anspruch 14, **dadurch gekennzeichnet, dass** die als Sonnenräder wirkenden Planetenradsatzwellen (S3, S4) des dritten und vierten Planetenradsatzes (P3, P4) als ein einziges Sonnenrad (S34) ausgebildet sind.

16. Getriebevorrichtung (1) nach einem der Ansprüche 1 bis 15, **dadurch gekennzeichnet, dass** die Getriebeeingangswelle (3) mit einem Rotor (7) einer weiteren elektrischen Maschine (8) gekoppelt ist.
